Europäisches Patentamt

European Patent Office

Office européen des brevets

(19)

(11) Veröffentlichungsnummer: **0 249 123 B1**

# EUROPÄISCHE PATENTSCHRIFT

(12)

(45) Veröffentlichungstag der Patentschrift: **19.02.92**

(21) Anmeldenummer: **87107919.0**

(22) Anmeldetag: **08.06.87**

(51) Int. Cl.⁵: **H02M 1/088**, H02H 7/122,
G01R 31/26

(54) **Verfahren zur Fehlerprüfung eines elektrischen Hochspannungsventils.**

(30) Priorität: **06.06.86 CH 2301/86**

(43) Veröffentlichungstag der Anmeldung:
**16.12.87 Patentblatt 87/51**

(45) Bekanntmachung des Hinweises auf die
Patenterteilung:
**19.02.92 Patentblatt 92/08**

(84) Benannte Vertragsstaaten:
**CH DE LI SE**

(56) Entgegenhaltungen:
EP-A- 0 170 882    EP-A- 0 173 076
DE-A- 2 552 414    DE-A- 2 745 326
DE-A- 2 746 299    GB-A- 1 161 734
US-A- 3 842 337    US-A- 4 471 301

GEC Journal of Science & Technology, Vol.
48, No. 3, 1982, S. 135-140

(73) Patentinhaber: **BBC Brown Boveri AG**
**Haselstrasse**
**CH-5401 Baden(CH)**

(72) Erfinder: **Häusler, Michael, Dr.**
**Sportplatzweg 4**
**W-7891 Weilheim(DE)**

**Beschreibung**

Bei der Erfindung wird ausgegangen von einem Verfahren zur Fehlerprüfung eines elektrischen Hochspannungsventil nach dem Oberbegriff des Patentanspruchs 1.

Mit diesem Oberbegriff nimmt die Erfindung auf einen Stand der Technik von Verfahren zur Fehlerprüfung eines elektrischen Hochspannungsventils Bezug, wie er aus: GEC Journal of Science & Technology, Vol. 48, No. 3, 1982, S. 135-140 bekannt ist. Dort sind bei einer 12pulsigen Brückenschaltung für 270 kV, 1852 A (500 MW) 125 Thyristoren je Ventil in Reihe geschaltet. Je Thyristorniveau sind zwei 4-kV-Thyristoren mit 56 mm Durchmesser parallelgeschaltet. Bei 24 Ventilen soll die Thyristor-Ausfallrate während 25 a weniger als 0,1 pro Jahr betragen. Die Zündsignale für jeden Thyristor werden über Lichtleiter übertragen. Der Fehlerzustand jedes Thyristorniveaus wird dort durch eine Lumineszenzdiode angezeigt. Es wird überwacht, ob die Thyristoren noch sperrfähig sind und ob eine Kippdiode wiederholt anspricht. Ein derartiges Ansprechen der Kippdiode deutet auf einen Fehler im Zündkanal; die Information kann zur entfernten Steuerstation auf Erdpotential übertragen werden.

Wegen der Erzeugung der Fehlerzustandssignale auf Hochspannungspotential und der doppelten Umformung der Signale (elektrisch-optisch-elektrisch) ist dieses Ueberwachungssystem teuer und insbesondere für magnetisch gezündete Ventile, bei denen die Zündung über Impulsübertrager erfolgt, zu aufwendig. Lichtleiter zur Informationsübertragung können brechen.

Die Erfindung, wie sie im Patentanspruch 1 definiert ist, löst die Aufgabe, ein einfacheres Verfahren zur Fehlerprüfung eines elektrischen Hochspannungsventils anzugeben, das keine speziellen Signalleitungen für die Uebertragung des Fehlerzustandes von jedem Thyristorniveau zur Steuerstation auf Erdpotential erfordert.

Ein Vorteil der Erfindung besteht darin, dass durch das Wegfallen von Signalleitungen eine Fehlerquelle entfällt. Damit wird eine höhere Verfügbarkeit des Ventils erreicht. Durch die Vermeidung des aufwendigen Verfahrens der Thyristorüberwachung an Ort und Stelle und damit des Aufwandes für die Signalübertragung von Hochspannungspotential auf Erde werden ausserdem Kosten eingespart. Statt vieler Einzelmessungen (Thyristorspannungen) genügt eine einzige Messung (Ventilstrom).

Ein Vorteil gemäss Anspruch 2 besteht darin, dass alle Thyristoren auf einfache Weise auf etwaige Zündkanaldefekte überwacht werden können. Dies bedeutet im Normalfall keine erhöhte Spannungsbeanspruchung der Thyristoren, sondern nur im Falle eines Zündkanaldefekts. Da die Prüfung nicht periodisch erfolgt und der Fehler sofort erkannt wird, kann diese erhöhte Beanspruchung toleriert werden.

Durch den individuellen Ueberspannungsschutz der Thyristoren gemäss Anspruch 3 kann die Statusüberwachung für die intakten Thyristoren ohne Gefahr für diese durchgeführt werden.

Ein Vorteil gemäss Anspruch 4 besteht darin, dass bei einem in Reihe mit einem Kondensator geschalteten Ventil alle Zündkanäle im gezündeten Ventilzustand auf Fehler überprüft werden können, d.h., periodisch. Sobald im gezündeten Zustand ein Zündkanal defekt ist (kein regulärer Zündimpuls an einem Thyristor), erfolgt ein periodisches Kippelement-Zünden des defekten Thyristors, wobei der Ventilzündzeitpunkt insgesamt etwas verzögert wird. Dies führt zur Anregung von Oberschwingungsströmen der Eigenfrequenz der Kondensatorbank, welche durch das Ventil geschaltet wird, ggf. in allen drei Ventilzweigen eines Drehstromnetzes. Zur Feststellung von periodischem Kippelement-Zünden genügt dann die Analyse des Stromes einer der drei Wechselstromphasen.

Ein Vorteil gemäss Anspruch 5 besteht darin, dass bei einem in Reihe mit einer Drossel geschalteten Ventil ungewollte, d.h. zu Falschmeldungen führende Ventilzündungen im Bereich oberhalb der Kippspannung eines Kippelementes sicher vermieden werden.

Das Verfahren gemäss Anspruch 6 ist besonders vorteilhaft für einen Betrieb des Ventils mit ständig aufgeladener Kondensatorbank.

Ein zyklisches Tauschen der Zündimpulse gemäss Anspruch 7 ermöglicht eine vollständige Prüfung aller n Thyristorniveaus innerhalb von n/2 Perioden der Netzspannung bei einem Ventil in Reihenschaltung mit einer Drossel und innerhalb von n Perioden bei einem Ventil in Reihenschaltung mit einem Kondensator.

Kurzzeit-Zündimpulse gemäss Anspruch 8 gewährleisten, dass keine ungewollte Zündung im Bereich einer Ventilspannung, die grösser als die Kippspannung ist, erfolgen kann.

Die Massnahme gemäss Anspruch 9 ist vor allem für eine vereinfachte Statusüberwachung für magnetisch gezündete Thyristorventile interessant. Die Festlegung des Zeitpunktes zur Abgabe der Prüfzündung ist dann besonders einfach, wenn die Kondensatorspannung im gesperrten Zustand des Ventils immer etwa den gleichen Wert hat. Dies ist dann der Fall, wenn die Kondensatoren über die Thyristoren der richtigen Stromrichtung (abhängig von der Polarität der Kondensatorspannung) periodisch auf den Scheitelwert der Netzspannung nachgeladen werden. In diesem Fall kann der Prüfzündimpuls von der Phasenlage

EP 0 249 123 B1

der Netzspannung abgeleitet werden. Die Ventilspannung braucht nicht gemessen zu werden, um den richtigen Zündzeitpunkt zu bestimmen.

Gemäss Anspruch 10 besteht der Vorteil, dass in Reihenschaltung mit einem Kondensator eine Statusüberwachung auch für sogenannte halbgesteuerte Ventile (Diode - Thyristor antiparallel) eingesetzt werden kann.

Zum einschlägigen Stand der Technik wird zusätzlich auf die deutsche Firmenzeitschrift: BBC Nachrichten, Vol. 59, Nr. 3/4 (1977) S. 152 - 158 hingewiesen, aus der Thyristor-Schutzschaltungen mit Kippdioden, sogenannten BOD-Elementen, bekannt sind.

Ein Zündimpulssteuergerät, das in Verbindung mit der vorliegenden Erfindung zur Ansteuerung der Thyristoren verwendbar ist, ist aus IFAC Control in Power Electronics and Electrical Drives, Lausanne, Switzerland, 1983, S. 493 - 500, insbesondere S. 500, Fig. 5, bekannt.

Die Erfindung wird nachstehend anhand eines Ausführungsbeispiels erläutert. Es zeigen:

Fig. 1      eine Prüfschaltung für ein elektrisches Ventil mit spannungsabhängigen Schutzeinrichtungen für jedes Thyristorniveau des Ventils,

Fig. 2      eine Schutzzündeinrichtung für eine Prüfschaltung gemäss Fig. 1,

Fig. 3      Spannungsverhältnisse bei einer Reihenschaltung eines Thyristorschalters mit einer Drossel,

Fig. 4a) - c)      Signaldarstellungen der Wechselspannung und der Zündimpulse für eine Reihenschaltung gemäss Fig. 3,

Fig. 5      Spannungsverhältnisse bei einer Reihenschaltung eines Thyristorschalters mit einem Kondensator,

Fig. 6a) und b)      Signaldarstellungen der Wechselspannung und der Zündimpulse für eine Reihenschaltung gemäss Fig. 4 bei positiver Kondensatorspannung,

Fig. 7a) und b)      Signaldarstellungen entsprechend den Fig. 6a) und 6b) bei negativer Kondensatorspannung und

Fig. 8      eine Signaldarstellung der an einem Wechselstromschalter anliegenden Wechselspannung mit Oberschwingungen, die durch periodisches Zünden eines Kippelementes der Schutzeinrichtung gemäss Fig. 2 verursacht sind.

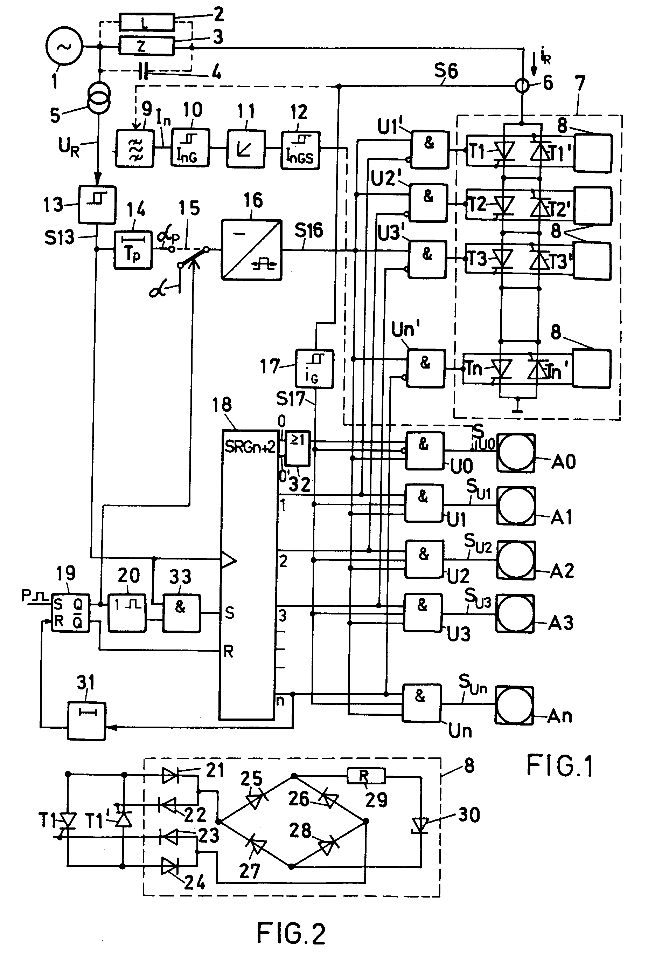

In Fig. 1 ist eine Prüfschaltung für ein elektrisches Ventil bzw. einen Thyristorschalter oder -steller 7 einer statischen Blindleistungskompensationsanlage für ein einphasiges Wechselstromnetz mit einer Wechselspannungsquelle 1, die über eine Reaktanz 3, einen Stromwandler 6 zur Detektion eines Ventilstromes $i_R$ und das elektrische Ventil 7 mit Erdpotential verbindbar ist, dargestellt. Die Reaktanz 3 kann, wie gestrichelt angeschlossen, ein induktiver Widerstand bzw. eine Drossel 2 oder ein Kondensator bzw. eine Kondensatorbank 4 sein.

Der Wechselstromschalter 7 weist n gleichgepolte, in Reihe geschaltete Thyristoren T1, T2 ... Tn auf, wobei jedem dieser Thyristoren ein Thyristor T1', T2' ... Tn' antiparallelgeschaltet ist. Für den Fall, dass die Reaktanz 3 ein Kondensator 4 ist, kann anstelle eines antiparallelen Thyristors eine antiparallele Diode verwendet werden.

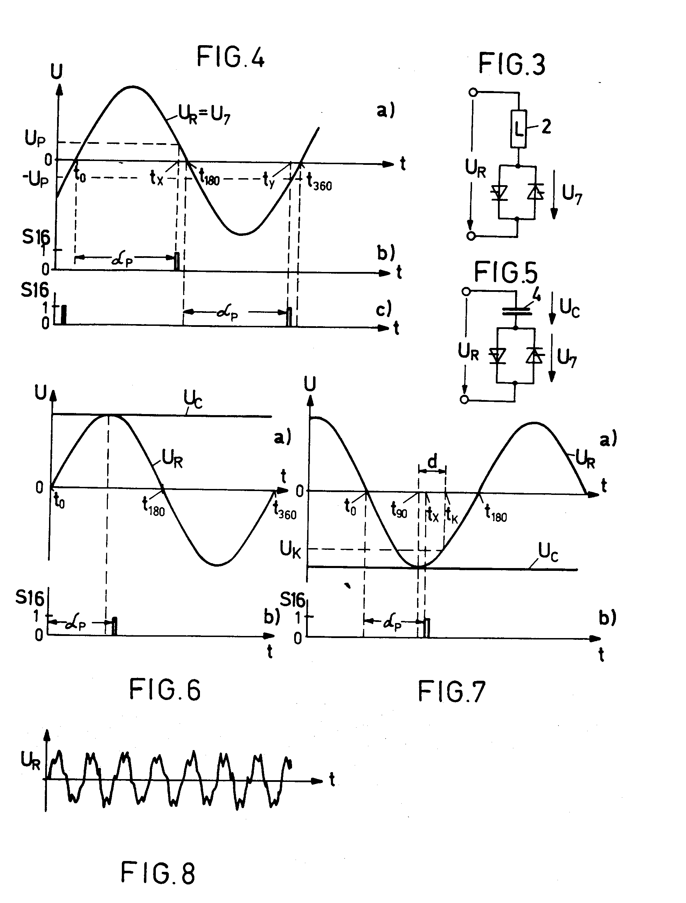

Je zwei derart antiparallelgeschaltete Halbleiterbauelemente bilden eine Thyristorstufe, die mit einer näher in Fig. 2 dargestellten spannungsabhängigen Schutzeinrichtung 8 verbunden ist. Wenn die Wechselspannung an einer Thyristorstufe einen vorgebbaren Wert, die Kippspannung $U_K$, vgl. Fig. 7, überschreitet, so wird den Steuereingängen der beiden Thyristoren der Thyristorstufe ein Schutz-Zündsignal zugeführt. Die normale Zündung der Thyristoren T1 ... Tn, T1' ... Tn' des Thyristorschalters 7 erfolgt durch ein allen gemeinsames Zündimpulssteuergerät 16 auf Erdpotential, dessen Ausgangssignal S16 ersten Eingängen von n UND-Gliedern U1', U2' ... Un' zugeführt ist. Jeder Thyristorstufe ist ein UND-Glied zugeordnet, wobei der Ausgang des jeweiligen UND-Gliedes über Glasfaserleitungen und einen nicht dargestellten optischen Signalwandler mit den Steuersignaleingängen der beiden Thyristoren der Thyristorstufe verbunden ist. Zweite, negierte Eingänge der UND-Glieder U1' ... Un' sind mit aufeinanderfolgenden Ausgängen 1 ... n eines Schieberegisters 18 verbunden. Die Ausgänge 1 ... n des Schieberegisters 18 sind ferner jeweils mit einem ersten Eingang eines UND-Gliedes U1, U2 ... Un verbunden, deren Ausgangssignale $S_{U1}$ .. $S_{Un}$ Anzeige- und Registriereinrichtungen A1 ... An zugeführt sind. Ferner sind ein erster mit 0 bezeichneter Ausgang und ein zweiter mit 0' bezeichneter Ausgang des Schieberegisters 18 über ein ODER-Glied 32 mit einem ersten Eingang eines UND-Gliedes U0 verbunden, dessen Ausgangssignal $S_{U0}$ eine Anzeige- und Registriereinrichtung A0 zugeführt ist.

Das Ausgangssignal S6 des Stromwandlers 6 wird in einem Wechselstromkomparator 17 auf Ueberschreiten eines vorgebbaren Stromgrenzwertes $i_G$ von vorzugsweise ≥ 1 % des Nennstromes von $i_R$ überwacht. Der Ausgang des Wechselstromkomparators 17 ist mit einem negierten zweiten Eingang des UND-Gliedes U0 sowie mit nicht negierten zweiten Eingängen der UND-Glieder U1 ... Un verbunden. Ferner

3

ist der Ausgang des Zündimpulssteuergerätes 16 mit nicht negierten dritten Eingängen der UND-Glieder U0 ... Un verbunden. Der Ausgang des Stromwandlers 6 ist ferner, wie gestrichelt angedeutet, über ein Bandpassfilter 9, einen Filterstromkomparator 10, einen Integrator 11 und einen weiteren Komparator 12 mit dem Eingang der Anzeige-und Registriereinrichtung A0 verbunden.

Das Bandpassfilter 9 ist auf eine Durchlassfrequenz

$$f = \sqrt{LC}/2\pi$$

abgestimmt, mit L = Induktivität der nicht dargestellten Dämpfungsdrossel in der Zuleitung zum Thyristorschalter und C = Kapazität der Kondensatorbank 4 (je Phase bei einer mehrphasigen Wechselspannungsquelle 1). Ausgangsseitig liefert das Bandpassfilter 9 einen oberschwingungshaltigen Filterstrom $I_n$ mit n = $f/f_N$, $f_N$ = 50 Hz = = Netzfrequenz. Dieser Filterstrom $I_n$ wird in dem Filterstromkomparator 10 auf Ueberschreiten eines vorgebbaren Filterstromgrenzwertes $I_{nG}$ von vorzugsweise 10 % des Nennstromes von $i_R$ überwacht. Der Integrator 11 dient zur Verzögerung des Ausgangssignals des Filterstromkomparators 10 um eine vorgebbare Zeitdauer, um ein transientes Ansprechen des Filterstromkomparators 10 zu unterdrükken. Der Komparator 12 überwacht das Ausgangssignal des Integrators 11 auf Ueberschreiten eines vorgebbaren Summen-Filterstromgrenzwertes $I_{nGS}$, das ein periodisches Zünden von Thyristoren des Wechselstromschalters 7 durch die Schutzzündeinrichtung 8 kennzeichnet und in der Anzeige- und Registriereinrichtung A0 angezeigt wird.

Die Wechselspannung $U_R$ der Wechselspannungsquelle 1 wird über einen Spannungswandler 5 einem Wechselspannungs-Nulldetektor 13 zugeführt. Für den Fall, dass die Reaktanz 3 eine Drossel 2 ist, wird ein Wechselspannungs-Nulldetektor 13 verwendet, dessen Ausgangssignal S13 bei jedem Spannungsnulldurchgang den Wert "1" annimmt. Wenn die Reaktanz 3 ein Kondensator 4 ist, wird ein Wechselspannungs-Nulldetektor 13 verwendet, dessen Ausgangssignal S13 nur dann den Wert "1" annimmt, wenn gleichzeitig $U_R$ = 0 und $dU_R/dt > 0$ ist, d.h. bei jedem $0^\circ$-Nulldurchgang.

Der Ausgang des Wechselspannungs-Nulldetektors 13 ist über ein Verzögerungsglied 14 mit vorgebbarer Verzögerung $T_P$ und einen elektronischen Schalter 15 mit dem Eingang des Zündimpulssteuergerätes 16, ferner mit dem Takteingang des Schieberegisters 18 sowie mit einem ersten Eingang eines UND-Gliedes 33 verbunden. Die Verzögerung $T_P$ entspricht einem Prüf-Zündwinkel $\alpha_P$, der den Prüfzündzeitpunkt für die Thyristoren T1 ... Tn, T1' ... Tn' definiert. Der Prüfzündzeitpunkt ist so zu wählen, dass eine am Thyristorschalter 7 anliegende Ventilspannung $U_7 < k \cdot n_P \cdot U_K$ ist, k = Sicherheitsfaktor < 1, vorzugsweise = 0,7, $n_P$ = Anzahl der absichtlich nicht gezündeten Thyristoren, $U_K$ = Schutzspannung einer Thyristorstufe.

Ist der Thyristorschalter 7 mit einem Kondensator 4 in Reihe geschaltet, so ist zusätzlich besonders zu beachten, dass genügend Zündspannung vorhanden ist, vorzugsweise mindestens 100 V. Dabei gilt für den Prüf-Zündwinkel $\alpha_P$ die Beziehung:

$\alpha_P = 90^\circ + \arccos(1-\Delta U/(\sqrt{2}U))$ für $U_C > 0$ und

$\alpha_P = 270^\circ + \arccos(1-\Delta U/(\sqrt{2}U))$ für $U_C < 0$

mit $U_C$ = Kondensatorspannung, U = effektive Leerlaufspannung (Phase - Phase), $\Delta U$ = minimale Zündspannung, $\alpha$ = 0 für U = 0 (Beginn einer Netzperiode).

Ist der Thyristorschalter 7 mit einer Drossel 2 in Reihe geschaltet, so ist der normale Bereich für einen Zündwinkel $\alpha$ durch die Beziehung: $90^\circ < \alpha < 180^\circ$ gegeben. Für den Prüf-Zündwinkel $\alpha_P$ gilt:

$\alpha_P = 180^\circ - \arcsin((k \cdot n_P \cdot U_K)/(\sqrt{2}U))$.

Tabelle 1 gibt den Effektivwert der Ventilspannung $U_7$ bei gesperrten Ventil am Thyristorschalter 7, den Prüf-Zündwinkel $\alpha_p$ und den Ventilstrom $i_R$ für die Statusüberwachung von einem Thyristorschalter 7 in Reihe mit einer Drossel 2 an, für einen Nennstrom von $i_R$ = 2560 $\cdot \sqrt{2}$ A.

4

Tabelle 1

| Beispiel | U$_7$ kV | $\alpha_p$ Grad elektrisch | | i$_R$ A | |
|---|---|---|---|---|---|
| | | 1 sperr. Thyristor | 2 sperr. Thyristoren | 1 sperr. Thyristor | 2 sperr. Thyristoren |
| 1 | 16,3 | 173 | 166 | 31 | 127 |
| 2 | 7,39 | 164 | 147 | 128 | 536 |
| 3 | 4,86 | 156 | 125 | 293 | 1330 |

Tabelle 2 gibt die Ventilspannung U$_7$, den Prüf-Zündwinkel $\alpha_p$ und den Sicherheitsabstand für die Statusüberwachung von einem Thyristorschalter 7 in Reihe mit einem Kondensator 4 an.

Tabelle 2

| Beispiel | U$_7$ kV | $\alpha_p$ Grad elektrisch | Sicherheitsabstand ms |
|---|---|---|---|
| 1 | 16,3 | 95 | 1,5 |
| 2 | 7,29 | 98 | 2,0 |
| 3 | 4,86 | 100 | 2,5 |

Die Schutzspannung U$_K$ betrug 4 kV. Der Zündimpuls muss genügend frühzeitig (ca. 500 $\mu$s) vor Ablauf des Sicherheitsabstandes verschwunden sein.

Während der Prüfung befindet sich der Schalter 15 in der gestrichelt dargestellten Position, andernfalls in der ausgezogen dargestellten, wobei die Vorgabe für den normalen Zündwinkel $\alpha$ von einer nicht dargestellten Steuereinrichtung kommt, wie sie z.B. aus der DE-PS 2 653 333 bekannt ist. Mittels des Zündwinkels $\alpha$ kann die Blindleistung des statischen Blindleistungskompensators stufenlos verstellt werden.

Mit 19 ist ein RS-Kippglied bezeichnet, dessen Setz-Eingang ein Prüf-Startsignal P von einer Bedienungsperson oder von einer übergeordneten, nicht dargestellten Steuereinrichtung zugeführt ist. Der Rücksetzeingang des RS-Kippgliedes 19 ist über ein Verzögerungsglied 31 mit vorgebbarer Zeitverzögerung von z.B. einer Viertelperiode der Netzspannung mit dem n-Ausgang des Schieberegisters 18 verbunden. Die Verzögerung ist so gewählt, dass ein Fehler in der n. Thyristorstufe noch sicher angezeigt und gespeichert werden kann. Das Q-Ausgangssignal des RS-Kippgliedes 19 ist einerseits über ein monostabiles, nicht nachtriggerbares Kippglied 20 einem 2. Eingang des UND-Gliedes 33 und andererseits dem Schalter 15 zugeführt, der sich während Q = "1" in der gestrichelt dargestellten Position befindet. Der Ausgang des UND-Gliedes 33 ist mit einem Setzeingang S des Schieberegisters 18 verbunden. Die Dauer des Ausgangssignals "1" des Kippgliedes 20 ist so gewählt, dass nur ein Signal S13 = "1" über den Setzeingang des Schieberegisters 18 darin eine "1" setzen kann. Der $\overline{Q}$-Ausgang des RS-Kippgliedes 19 ist mit dem Rücksetzeingang des Schieberegisters 18 verbunden. $\overline{Q}$ = "1" setzt die Ausgänge 0 ... n des Schieberegisters 18 auf "0".

In Fig. 2 sind gleiche Teile mit gleichen Bezugszeichen wie in Fig. 1 versehen. Mit 21 - 28 sind Dioden bezeichnet, mit 29 ein ohmscher Widerstand und mit 30 eine Kippdiode mit einer vorgebbaren Kippspannung U$_K$ von z.B. 4 kV. Bei Ueberschreiten der Kippspannung U$_K$ bricht die Spannung an der Kippdiode 30 zusammen und die Kippdiode wird leitend.

Für den Fall, dass die Anode von T1 und die mit ihr verbundene Kathode von T1′ positiv, die Kathode von T1 und die mit ihr verbundene Anode von T1′ negativ sowie die Spannung an dieser Thyristorstufe > U$_K$ ist, wird die Steuerelektrode von T1 über die Bauelemente 21, 25, 29, 30, 28 und 23 vorgestromt, und damit der Thyristor T1 gezündet.

Bei entgegengesetztem Potential an der Thyristorstufe wird die Steuerelektrode von T1′ über die Bauelemente 24, 26, 29, 30, 27 und 22 vorgestromt und damit der Thyristor T1′ gezündet.

Nachfolgend soll die Funktion der Prüfschaltung in Verbindung mit den Fig. 3 - 8 erläutert werden. In den Fig. 4a), 6a) und 7a) ist auf der Ordinate die Spannung U und auf der Abszisse die Zeit t aufgetragen. Die Fig. 4b), 4c), 6b) und 7b) zeigen Zündsignale S16 in Abhängigkeit von der Zeit t.

Prüfung eines Ventils 7 in Reihenschaltung mit einer Drossel

Die Prüfung erfolgt sporadisch; bei einem Thyristorschalter 7 in Reihe mit einer Drossel 2 nur dann, wenn der normale Regelkreis für die Dauer der Ueberwachung unterbrochen ist und das Ventil sperrt, insbesondere nachts.

## Vorprüfung (Funktion der Zündkanäle)

Bevor eine Statusprüfung der einzelnen Thyristorstufen erfolgt, wird in einer Vorprüfung festgestellt, ob alle Zündkanäle in Ordnung sind, d.h., ob zu dem Zündzeitpunkt alle Thyristoren einer Stromrichtung zünden. Es muss dann ein Strom während etwa einer halben Netzperiode durch das Ventil 7 fliessen. Die Vorprüfung wird in Verbindung mit den Fig. 3 und 4 erläutert, wobei eine Drossel 2 mit dem Ventil 7 in Reihe geschaltet ist und die Wechselspannung $U_R$ gleich der Ventilspannung $U_7$ ist. Zur Initiierung der Vorprüfung wird ein kurzes Prüf-Startsignal P auf den Setzeingang S des RS-Kippgliedes 19 gegeben. Dadurch wird Q = "1", und am Ausgang des Kippgliedes 20 liegt ein "1"-Signal an. Wenn nun von dem Wechselspannungs-Nulldetektor 13 z.B. bei einem $0^\circ$-Nulldurchgang im Zeitpunkt $t_0$ ein Signal S13 = "1" am Schieberegister 18 eintrifft, wird darin eine "1" gesetzt, die an dessen 0-Ausgang und damit am ersten Eingang des UND-Gliedes U0 anliegt. Mit Q = "1" wird der Schalter 15 in die gestrichelt dargestellte Position gesteuert. Nach einer Zeitdauer $T_P$, entsprechend dem Zündwinkel $\alpha_P$, liefert das Zündimpulssteuergerät 16 ein Zündsignal S16 = "1" im Zeitpunkt $t_x$ bei einer Ventilspannung $U_7 = U_P$, vgl. Fig. 4a) und 4b), an die UND-Glieder U1' - Un' sowie an das UND-Glied U0. Da die Ausgänge 1 - n des Schieberegisters zu diesem Zeitpunkt den logischen Wert "0" aufweisen, sind die negierten, 2. Eingänge der UND-Glieder U1' - Un' vorbereitet, d.h. auf logisch "1", so dass das Zündsignal S16 alle positiv vorgespannten Thyristoren T1 ... Tn zündet, falls die Zündkanäle in Ordnung sind. Es fliesst dann ein Ventilstrom $i_R$, so dass der Wechselstromkomparator 17 anspricht. Dessen Ausgangssignal S17 nimmt den logischen Wert "1" an und hält über den negierten 2. Eingang des UND-Gliedes U0 dessen Ausgangssignal $S_{U0}$ auf "0". Hat einer der Thyristoren T1 ... Tn nicht gezündet, so fliesst kein Ventilstrom, und $S_{U0}$ = "1" bewirkt in der Anzeige- und Registriereinrichtung A0 eine Zündkanal-Fehleranzeige, die dort gespeichert wird. Der 3. Eingang des UND-Gliedes U0 ist verzögert, damit zwischen dem Eintreffen des Zündsignals S16 = "1" und dem Eintreffen des Signales S17 = "1" kein Zündkanal-Fehlersignal $S_{U0}$ = "1" entstehen kann.

Für den Fall, dass der Wechselspannungs-Nulldetektor 13 statt des $0^\circ$-Nulldurchganges einen $180^\circ$-Nulldurchgang im Zeitpunkt $t_{180}$ detektiert hat, liegt nachfolgend an den Thyristoren T1' ... Tn' positives Potential an, so dass diese Thyristoren zum Zeitpunkt $t_y$ bei einer Prüfspannung $-U_P$ einen Zündimpuls erhalten, vgl. Fig. 4c). Der Nulldurchgang von $U_R$ zum Zeitpunkt $t_{360}$ entspricht wieder demjenigen zum Zeitpunkt $t_0$.

In beiden beschriebenen Fällen handelt es sich um den 1. Spannungs-Nulldurchgang der Vorprüfung. Beim nächsten, d.h. 2. Spannungs-Nulldurchgang von $U_R$ erzeugt S13 = "1" ein Taktsignal für das Schieberegister 18, wodurch dessen Ausgang 0' = "1" wird und alle übrigen Ausgänge den logischen Wert "0" aufweisen. In diesem Zustand wird die 2. Thyristorhälfte gezündet und geprüft, d.h., wenn z.B. beim 1. Spannungs-Nulldurchgang die Thyristoren T1 ... Tn gezündet werden, werden beim 2. Spannungs-Nulldurchgang die Thyristoren T1' ... Tn' gezündet. Zur Vorprüfung wird also je Ventilzweig eine Halbperiode der Netz-Wechselspannung benötigt. Bei intakten Zündkanälen fliesst während dieser Zeit ein kleiner Ventilstrom.

## Statusprüfung (Prüfung auf Thyristordefekte)

Anschliessend an die Vorprüfung erfolgt die Statusprüfung auf Thyristordefekte in den einzelnen Thyristorstufen. Im Spannungsbereich $U_P < U_K$ werden alle Thyristoren bis auf jeweils einen kurz von dem Zündimpulssteuergerät 16 beim Prüfzündwinkel $\alpha_P$ gezündet.

Beim 3. Taktimpuls S13 = "1" wird der Ausgang 1 des Schieberegisters 18 = "1", während alle anderen Ausgänge den logischen Wert "0" aufweisen. Dadurch wird das UND-Glied U1' über seinen negierten 2. Eingang gesperrt, während die UND-Glieder U2' ... Un' die Zündsignale S16 = "1" passieren lassen, so dass die Thyristorstufen T2, T2'...Tn, Tn' Zündimpulse erhalten, nicht jedoch die Thyristorstufe T1, T1'. Falls die Thyristorstufe T1, T1' in Ordnung ist, fliesst kein Ventilstrom $i_R$, andernfalls spricht der Wechselstromkomparator 17 an und erzeugt über das vorbereitete UND-Glied U1 ein Status-Fehlersignal $S_{U1}$ = = "1", das in der Anzeige- und Registriereinrichtung A1 angezeigt und registriert wird.

Beim anschliessenden 4. Nulldurchgang von $U_R$ und somit 4. Taktimpuls wird der Ausgang 2 des Schieberegisters 18 auf den logischen Wert "1" gesetzt usw. bis zum Ausgang n, wodurch der Reihe nach alle Thyristorstufen geprüft werden. Nachdem der letzte Ausgang n den logischen Wert "1" angenommen hat, wird das Schieberegister 18 über das Verzögerungsglied 31 und das RS-Kippglied 19 in seinen Ausgangszustand zurückgesetzt, bei dem alle Ausgänge 0, 0', 1 ... n den logischen Wert "0" aufweisen - bis zu einem neuen Test. Gleichzeitig wird der Schalter 15 in seine ausgezogen dargestellte Normalposition gebracht.

Ein defekter Thyristor stellt einen Kurzschluss dar. Die Anzeige- und Registriereinrichtungen A1 ... An zeigen an, in welcher Thyristorstufe der Kurzschluss auftrat. Sofern nur eine Thyristorstufe defekt gemeldet ist, kann im allgemeinen weiterhin der Betrieb des Ventils erlaubt werden, da üblicherweise mindestens eine redundante Thyristorstufe je Ventil vorgesehen wird. Insgesamt dauert die Statusprüfung n Halbperioden für ein Einphasenventil.

Bei einem Dreiphasennetz kann die Prüfung parallel an jedem Phasenleiter vorgenommen werden, so dass höchstens eine Netzperiode mehr für die gesamte Statusprüfung erforderlich ist. Während der Dauer der Vor- und Statusprüfung steht das Ventil 7 nicht für den normalen Betrieb zur Verfügung. Bei intaktem Ventil fliesst während der Statusprüfung kein Strom.

### Prüfung eines Ventils 7 in Reihenschaltung mit einem Kondensator

Fig. 5 zeigt die Spannungen bei einer derartigen Schaltung. Die Ventilspannung $U_7$ zeigt nach einem Abschalten einen Verlauf entsprechend einer $(1 - \cos \omega t)$-Funktion, vgl. z.B. die Schweizer Firmenzeitschrift Brown Boveri Mitteilungen 3 (1982) S. 85 - 89, insbesondere S. 87. Es existiert dabei ein Zeitbereich bzw. Zündzeitintervall d, in dem die momentane Ventilspannung $U_7$ kleiner als die zulässige Thyristorspannung bzw. kleiner als $U_K$ ist, vgl. Fig. 7a).

### Vorprüfung

### Methode a):

Es sei angenommen, dass das Ventil 7 kurz vorher leitend gewesen sei und gesperrt wurde. Das Ventil 7 wird anschliessend im beschriebenen Zeitbereich d mit $U_7 < U_K$ kurz gezündet. Bei intakten Zündkanälen muss das Ventil 7 zünden und den vollen Strom eine Halbperiode lang führen (bei halbgesteuerten Ventilen eine Periode lang), was durch Ueberwachen des Ventilstromes $i_K$ in der oben erwähnten Weise geschehen kann. Diese Prüfung ist jederzeit während des normalen Betriebes möglich, sobald das Ventil durch das Zündimpulssteuergerät 16 normal blockiert worden ist. Zur Prüfung wird eine Periode benötigt.

### Methode b):

Diese Methode beruht auf der Feststellung, dass bei defektem Zündkanal über die Kippdiode 30 nachgezündet werden muss und dadurch Stromharmonische der Eigenresonanz der Kondensatorbank angeregt werden, vgl. Fig. 8. Diese Methode erfordert keinen Eingriff in die Ventilsteuerung, sondern setzt lediglich voraus, dass während einer zur sicheren Erkennung ausreichend langen Zeit (einige Netzperioden) das Ventil 7 eingeschaltet ist.

Im Falle eines periodischen Schutz-Zündens hat das Ausgangssignal des Komparators 12 den logischen Wert "1", so dass die Anzeige- und Registriereinrichtung A0 einen Zündkanalfehler anzeigt.

### Statusprüfung

Unter der Voraussetzung, dass alle Zündkanäle ordnungsgemäss funktionieren, kann die Statusprüfung in dem genannten Spannungsbereich mit $U_7 < U_K$, wie zuvor beschrieben, durchgeführt werden. Zur Prüfung werden maximal n Netzperioden benötigt. Die Prüfung kann während des normalen Betriebs erfolgen, sobald das Zündimpulssteuergerät 16 eine normale Abschaltung der Kondensatorbank 4 veranlasst. Bei defekten Thyristoren fliesst als Folge der Prüfung jeweils für eine volle Periode Strom.

Anstelle einer gemeinsamen Zündsignalzuführung für beide Thyristoren einer Thyristorstufe kann eine für jeden Thyristor individuelle Zündsignalzuführung vorgesehen sein.

Es versteht sich, dass die oben beschriebenen Funktionen der Prüfschaltung durch einen schnellen Rechner realisiert werden können.

Bei der Statusprüfung kann es bei einer grossen Anzahl in Reihe geschalteter Thyristoren vorteilhaft sein, gleichzeitig zwei Prüflingen kein Zündsignal zukommenzulassen.

## Patentansprüche

1. Verfahren zur Fehlerprüfung eines elektrischen Hochspannungsventils (7),

a) mit mindestens zwei in Reihe geschalteten Thyristoren (T1 ... Tn; T1' ... Tn'),

b) die über mindestens eine Reaktanz (2 - 4) mit einer Wechselspannungsquelle (1) in Wirkverbindung stehen,

dadurch gekennzeichnet,

c) dass in einer Statusprüfung auf Thyristordefekte einzelner Thyristoren oder Thyristorstufen bei abgeschalteten Normal-Zündimpulsen ($\alpha$) innerhalb eines vorgebbaren Zündzeitintervalles (d), welches Zündzeitintervall so gewählt ist, dass die an einem Thyristor anliegende Spannung ($U_p$) kleiner als ein vorgebbarer Spannungsgrenzwert bzw. eine vorgebbare Kippspannung ($U_K$) ist,

d) alle Thyristoren (T1 ... Tn; T1' ... Tn') einer Stromrichtung bis auf mindestens einen Prüfling gezündet werden,

e) dass ein Ventilstrom ($i_R$) detektiert wird,

f) dass ein Fehlersignal ($S_{U0}$ ... $S_{Un}$) erzeugt wird, wenn der Ventilstrom während dieses Zündzeitintervalles einen vorgebbaren Stromgrenzwert ($i_G$) überschreitet, und

g) dass nacheinander jeder der in Reihe geschalteten Thyristoren oder Thyristorstufen als Prüfling in einer Statusprüfung geprüft wird, wobei zumindest während der Prüfungsdauer Normal-Zündimpulse ($\alpha$) für das elektrische Hochspannungsventil (7) abgeschaltet sind.

2. Verfahren nach Anspruch 1, dadurch gekennzeichnet,

a) dass in einer Vorprüfung, d. h. vor einer individuellen, nichtperiodischen Statusprüfung eines Thyristors oder einer Thyristorstufe im gesperrten Zustand des Ventils (7) und bei abgeschalteten Normal-Zündimpulsen ($\alpha$) alle Thyristoren (T1 ... Tn; T1' ... Tn') einer Stromrichtung gleichzeitig gezündet werden und

b) dass ein Zündkanal-Fehlersignal ($S_{U0}$ = 1") erzeugt wird, wenn danach kein Ventilstrom ($i_R$) durch das Hochspannungsventil (7) fliesst,

c) insbesondere, wenn der Ventilstrom ($i_R$) kleiner als ein vorgebbarer Stromgrenzwert $i_G$ ist.

3. Verfahren nach Anspruch 1 oder 2, dadurch gekennzeichnet, dass mindestens ein Thyristor oder eine Thyristorstufe gezündet wird, wenn die an der Thyristorstufe anliegende Spannung im Betrag grösser als eine vorgebbare Kippspannung ($U_K$) ist.

4. Verfahren nach Anspruch 3, dadurch gekennzeichnet,

a) dass mindestens ein Oberschwingungsstrom ($I_n$) aus dem Ventilstrom ($i_R$) herausgefiltert wird und dass ein Zündkanal-Fehlersignal ($S_{U0}$ = 1) erzeugt wird, wenn dieser mindestens eine Oberschwingungsstrom einen vorgebbaren Oberschwingungsstrom-Grenzwert ($I_{nG}$) überschreitet,

b) insbesondere, wenn dieser mindestens eine Oberschwingungstrom diesen Oberschwingungstrom-Grenzwert während einer vorgebbaren Zeitdauer überschreitet.

5. Verfahren nach Anspruch 3 oder 4, insbesondere für Ventile in Reihenschaltung mit einer Drossel, dadurch gekennzeichnet, dass die Zündung der Thyristoren (T1 ... Tn; T1' ... Tn') bei einem Prüf-Zündwinkel

$$\alpha_p = 180° - \arcsin\left(\frac{k \cdot n_p \cdot U_K}{\sqrt{2} \cdot U}\right)$$

erfolgt, k = Sicherheitsfaktor < 1, insbesondere = 0,7, $n_p$ = Anzahl der absichtlich nicht gezündeten Thyristoren, $U_K$ = Kippspannung eines Kippelements (30), U = effektive Leerlaufspannung.

6. Verfahren nach Anspruch 3 oder 4, insbesondere für Ventile in Reihenschaltung mit einem Kondensator, dadurch gekennzeichnet,

a) dass die Zündung der Thyristoren (T1 ... Tn; T1' ... Tn') bei einem Prüf-Zündwinkel

$$\alpha_p = 90° + \arccos\left(1 - \frac{\Delta U}{\sqrt{2} \cdot U}\right)$$

erfolgt, falls U positiv ist, U = effektive Leerlaufspannung, $\Delta U$ = minimale Zündspannung oder

b) bei

$$\alpha_P = 270° + \arccos\left(1 - \frac{\Delta U}{\sqrt{2} \cdot U}\right),$$

falls U negativ ist.

8

**7.** Verfahren nach einem der Ansprüche 1 bis 6, dadurch gekennzeichnet, dass jede Thyristorstufe zyklisch nacheinander überprüft wird, wobei jeweils mindestens eine zyklisch aufeinanderfolgende, zu prüfende Thyristorstufe keinen Zündimpuls erhält.

**8.** Verfahren nach einem der Ansprüche 1 bis 7, dadurch gekennzeichnet,
a) dass die Dauer eines Zündimpulses im Bereich von 5 $\mu$s - 200 $\mu$s,
b) insbesondere bei 100 $\mu$s bei magnetischer Zündung und
c) insbesondere bei 10 $\mu$s bei Lichtzündung liegt.

**9.** Verfahren nach einem der Ansprüche 3 bis 8, dadurch gekennzeichnet,
a) dass ein Zündimpuls erst dann abgegeben wird, wenn die Ventilspannung ($U_7$) mindestens 100 V beträgt und
b) kleiner als k $\bullet$ $n_P$ $\bullet$ $U_K$ ist, k = Sicherheitsfaktor < 1, insbesondere = 0,7, $n_P$ = Anzahl absichtlich nicht gezündeter Thyristoren, $U_K$ = Kippspannung eines Kippelements.

**10.** Verfahren nach einem der Ansprüche 1 bis 9, dadurch gekennzeichnet, dass das Ventil (7) ein Thyristorschalter (T1 ... Tn; T1' ... Tn') ist, wobei zu jedem Thyristor (T1 ... Tn) ein Thyristor (T1' ... Tn') oder eine Diode antiparallel geschaltet sind.

## Claims

**1.** Process for the fault checking of an electric high-voltage valve (7),
a) with at least two series-connected thyristors (T1...Tn; T1'...Tn'),
b) which are in effective connection via at least one reactor (2 - 4) with an AC voltage source (1),
characterised
c) in that, in a status check for thyristor defects of individual thyristors or thyristor stages with deactivated normal triggering pulses ($\alpha$) within a predeterminable triggering interval (d), which triggering interval is chosen such that the voltage ($U_p$) at a thyristor is smaller than a predeterminable voltage limit value or a predeterminable break-over voltage ($U_k$),
d) all thyristors (T1...Tn; T1'...Tn') of one current direction are triggered, apart from at least one thyristor being tested,
e) in that a valve current ($i_R$) is detected,
f) in that a fault signal ($S_{U0}...S_{Un}$) is generated if the valve current exceeds a predeterminable current limit value ($i_G$) within this triggering interval, and
g) in that each of the thyristors or thyristor stages connected in series is checked one after the other as test thyristor in a status check, normal triggering pulses ($\alpha$) for the electric high-voltage valve (7) being deactivated at least for the duration of the check.

**2.** Process according to Claim 1, characterised
a) in that, in a preliminary test, i.e. before an individual, non-periodic status check of a thyristor or of a thyristor stage, all thyristors (T1...Tn; T1'...Tn') of one current direction are triggered simultaneously in the blocked state of the valve (7) and with deactivated normal triggering pulses ($\alpha$) and
b) in that a triggering channel fault signal ($S_{U0}$ = 1") is generated if no valve current ($i_R$) subsequently flows through the high-voltage valve (7),
c) in particular if the valve current ($i_R$) is smaller than a predeterminable current limit value ($i_G$).

**3.** Process according to Claim 1 or 2, characterised in that at least one thyristor or one thyristor stage is triggered if the voltage at the thyristor stage is of an amount greater than a predeterminable break-over voltage ($U_K$).

**4.** Process according to Claim 3, characterised
a) in that at least one harmonic current ($I_n$) is filtered out from the valve current ($i_R$) and in that a triggering channel fault signal ($S_{U0}$ = 1) is generated if this at least one harmonic current exceeds a predeterminable harmonic current limit value ($I_{nG}$),
b) in particular if this at least one harmonic current exceeds this harmonic current limit value for a predeterminable period of time.

**5.** Process according to Claim 3 or 4, in particular for valves in series connection with a choke, characterised in that the triggering of the thyristors (T1...Tn; T1'.. Tn') takes place at a test triggering angle

$$\alpha_p = 180° - \arcsin\left((k \cdot n_p \cdot U_K)/(\sqrt{2} \cdot U)\right)$$

k = safety factor < 1, in particular = 0.7, $n_p$ = number of deliberately not triggered thyristors, $U_K$ = break-over voltage of a break-over element (30), U = effective no-load voltage.

6. Process according to Claim 3 or 4, in particular for valves in series connection with a capacitor, characterised

a) in that the triggering of the thyristors (T1...Tn; T1'...Tn') takes place at a test triggering angle

$$\alpha_p = 90° + \arccos\left(1 - \Delta U/(\sqrt{2} \cdot U)\right)$$

if U is positive, U = effective no-load voltage, ΔU = minimum triggering voltage or
b) at

$$\alpha_p = 270° + \arccos\left(1 - \Delta U/(\sqrt{2} \cdot U)\right),$$

if U is negative.

7. Process according to one of Claims 1 to 6, characterised in that each thyristor stage is checked cyclically one after the other, in each case at least one cyclically successive thyristor stage to be checked receiving no triggering pulse.

8. Process according to one of Claims 1 to 7, characterised
a) in that the duration of a triggering pulse is in the range of 5 $\mu$s - 200 $\mu$s,
b) in particular about 100 $\mu$s with magnetic triggering and
c) in particular about 10 $\mu$s with light triggering.

9. Process according to one of Claims 3 to 8, characterised
a) in that a triggering pulse is not delivered until the valve voltage ($U_7$) is at least 100 V and
b) is smaller than $k \cdot n_p \cdot U_K$, k = safety factor < 1, in particular = 0.7, $n_p$ = number of deliberately not triggered thyristors, $U_k$ = break-over voltage of a break-over element.

10. Process according to one of Claims 1 to 9, characterised in that the valve (7) is a thyristor switch (T1...Tn; T1'.. Tn'), a thyristor (T1'...Tn') or a diode being connected in antiparallel with each thyristor (T1....Tn).

**Revendications**

1. Procédé pour le contrôle des défauts d'une soupape électrique à haute tension (7),
(a) comportant au moins deux thyristors connectés en série (T1, ..., Tn; T1', ..., Tn'),
(b) qui sont en liaison active avec une source de tension alternative (1) par l'intermédiaire d'au moins une réactance (2-4),
caractérisé en ce :
(c) que, dans un contrôle d'état visant à détecter des anomalies de thyristors individuels ou d'étages à thyristors, tandis que des impulsions d'amorçage normal (α) sont coupées dans un intervalle de temps d'amorçage (d) prédéfini, lequel intervalle de temps d'amorçage est choisi tel que la tension ($U_p$) appliquée à un thyristor soit inférieure à une limite de tension prédéfinie ou à une tension de retournement ($U_K$) prédéfinie,
(d) tous les thyristors (T1, ..., Tn; T1', ..., Tn') d'un sens du courant sont amorcés jusqu'à au moins une éprouvette,
(e) un courant de soupape ($i_R$) est détecté,
(f) un signal de défaut ($S_{U0}$, ..., $S_{Un}$) est produit lorsque le courant de soupape dépasse par excès une limite de courant prédéfinie ($i_G$) pendant cet intervalle de temps d'amorçage, et
(g) que, successivement, chacun des thyristors ou des étages à thyristors connectés en série est contrôlé, à titre d'éprouvette, dans un contrôle d'état, les impulsions d'amorçage normal (α) pour la soupape électrique à haute tension (7) étant coupées au moins pendant la durée du contrôle.

2. Procédé suivant la revendication 1, caractérisé en ce :

(a) que dans un précontrôle, c'est-à-dire avant un contrôle d'état non périodique individuel d'un thyristor ou d'un étage à thyristors dans l'état bloqué de la soupape (7) et lorsque les impulsions d'amorçage normal ($\alpha$) sont coupées, tous les thyristors (T1, ..., Tn; T1', ..., Tn') d'un sens du courant sont amorcés simultanément, et

(b) qu'un signal de défaut de canal d'amorçage ($S_{U0} = 1"$) est produit lorsque, ensuite, aucun courant de soupape ($i_R$) ne passe par la soupape à haute tension (7),

(c) en particulier lorsque le courant de soupape ($i_R$) est inférieur à une limite de courant prédéfinie ($i_G$).

3. Procédé suivant la revendication 1 ou 2, caractérisé en ce qu'au moins un thyristor ou un étage à thyristors est amorcé lorsque la tension appliquée à l'étage à thyristors est, en valeur absolue, supérieure à une tension de retournement ($U_K$) prédéfinie.

4. Procédé suivant la revendication 3, caractérisé en ce :

(a) qu'au moins un courant harmonique ($I_n$) est séparé par filtrage du courant de soupape ($i_R$) et qu'un signal de défaut de canal d'amorçage ($S_{U0} = 1$) est produit lorsque cet au moins un courant harmonique dépasse par excès une limite de courant harmonique ($I_{nG}$) prédéfinie,

(b) en particulier, lorsque cet au moins un courant harmonique dépasse par excès cette limite de courant harmonique pendant une période prédéfinie.

5. Procédé suivant la revendication 3 ou 4, en particulier pour des soupapes en série avec une bobine de self, caractérisé en ce que l'amorçage des thyristors (T1, ..., Tn; T1', ..., Tn') s'effectue pour un angle d'amorçage de contrôle :

$$\alpha_p = 180° - \arc \sin [(k \bullet n_p \bullet U_K)/(\sqrt{2} \bullet U)]$$

$k$ = facteur de sécurité < 1, en particulier = 0,7, $n_p$ = nombre des thyristors volontairement non amorcés, $U_K$ = tension de retournement d'une bascule (30), $U$ = tension de marche à vide efficace.

6. Procédé suivant la revendication 3 ou 4, en particulier pour des soupapes connectées en série avec un condensateur, caractérisé en ce :

(a) que l'amorçage des thyristors T1 ,..., Tn; T1', ..., Tn') s'effectue pour un angle d'amorçage de contrôle,

$$\alpha_p = 90° - \arc \cos [1-\Delta U/(\sqrt{2} \bullet U)]$$

lorsque U est positif, U = tension de marche à vide efficace, $\Delta U$ = tension d'amorçage minimale, ou

(b) pour

$$\alpha_p = 270° + \arc \cos [1-\Delta U/(\sqrt{2} \bullet U)]$$

au cas où N est négatif.

7. Procédé suivant l'une quelconque des revendications 1 à 6, caractérisé en ce que les étages à thyristors sont chacun contrôlés cycliquement l'un après l'autre, étant entendu que chaque fois au moins un des étages à thyristors à contrôler successivement de manière cyclique ne reçoit aucune impulsion d'amorçage.

8. Procédé suivant l'une quelconque des revendications 1 à 7, caractérisé en ce :

(a) que la durée d'une impulsion d'amorçage est comprise entre 5 $\mu$s et 200 $\mu$s,

(b) en particulier, de 100 $\mu$s dans le cas d'un amorçage magnétique,

(c) en particulier, de 10 $\mu$s dans le cas d'un allumage optique.

9. Procédé suivant l'une quelconque des revendications 3 à 8, caractérisé en ce :

(a) qu'une impulsion d'amorçage n'est fournie que lorsque la tension de soupape ($U_7$) s'élève au moins à 100 V, et
(b) est inférieure à $k \cdot n_p \cdot U_K$, k = facteur de sécurité < 1, en particulier = 0,7, $n_p$ = nombre de thyristors intentionnellement non amorcés, $U_K$ = tension de retournement d'une bascule.

10. Procédé suivant l'une quelconque des revendications 1 à 9, caractérisé en ce que la soupape (7) est un interrupteur à thyristors (T1, ..., Tn; T1', ..., Tn'), un thyristor (T1', ..., Tn') ou une diode étant connecté de manière antiparallèle à chaque thyristor (T1, ..., Tn).

FIG.1

FIG.2

## FIG.4

## FIG.3

## FIG.5

## FIG.6

## FIG.7

## FIG.8